# EUROPÄISCHE PATENTSCHRIFT

(11) **EP 0 684 454 B1**
(45) Veröffentlichungstag und Bekanntmachung des Hinweises auf die Patenterteilung: **16.12.1998**
(21) Anmeldenummer: 95106892.3
(22) Anmeldetag: 06.05.1995
(51) Int. Cl.: G01D 5/14, G01D 5/16, G01P 3/488, G01D 5/20

(54) **Magnetfeldinduzierter Impulsgeber, insbesondere zur Drehzahlerfassung einer sich in einem Gehäuse drehenden Welle**
Magnetically induced pulse generator, especially for measuring the speed of a shaft rotating inside a housing
Générateur inductif d'impulsions pour mesurer la vitesse de rotation d'un arbre tournant dans un carter

(30) Priorität: 26.05.1994 DE 4418294
(43) Veröffentlichungstag der Anmeldung: 29.11.1995
(73) Patentinhaber: SIEMENS AKTIENGESELLSCHAFT, 80333 München (DE)
(72) Erfinder: Preusse, Norbert, Dr., D-63755 Alzenau (DE)

(56) Entgegenhaltungen:
- DE-A- 3 333 497
- DE-A- 3 411 773

## Beschreibung

Die Erfindung betrifft einen magnetfeldinduzierten Impulsgeber zur Erfassung von sich bewegenden ferromagnetischen Teilen unter Verwendung eines zwischen den sich bewegenden ferromagnetischen Teilen und einem magnetischen Sensor zur Erfassung eines Magnetfeldes angeordnetem Magneten, dessen Magnetfeld durch die ferromagnetischen Teile so beeinflußt wird, daß im magnetischen Sensor von der Bewegung der ferromagnetischen Teile abhängige Impulse erzeugt werden.

Ein derartiger magnetfeldabhängiger Impulsgeber ist beispielsweise aus DE-PS 34 11 773 bekannt. Zur Erfassung der Drehzahl einer Welle, dient hier ein Impulsgeber, der die Feldänderungen eines Magneten ausnutzt, die durch die Zähne eines sich mit der Welle drehenden Zahnrades ausgelöst werden. Der Impulsgeber besteht hier aus einem bewickelten weichmagnetischen Streifen mit an einer Stirnseite dieses Streifens angeordnetem den Zähnen des Zahnrades zugewandten Magneten. Wenn sich bei dieser Anordnung die Zähne des Zahnrades an dem Magneten vorbeibewegen, so wird - da die Zähne des Zahnrades ferromagnetisch sind-das Magnetfeld des Magneten periodisch verformt, so daß der Sensor, der eine Komponente des sich so ändernden Magnetfeldes erfaßt, unterschiedlich magnetisiert wird. Der Magnetisierungszustand wird durch die Auswerteelektronik des magnetischen Sensors in Spannungsimpulse umgesetzt, die über einen Zähler zur Bestimmung der Drehzahl der Welle herangezogen werden. Die hier beschriebene Vorrichtung zur Erfassung der Drehzahl eines Bewegungsgebers besteht aus einem Permanentmagneten und einem Sensor, der mit diesem in einer Ebene liegt und in geringem Abstand zum permanentmagneten angeordnet ist. Die aus Permanentmagnet und Sensor bestehende Vorrichtung kann wahlweise radial oder axial zum Bewegungsgeber angeordnet sein.

Die hohe Empfindlichkeit dieser Anordnung, insbesondere des magnetischen Sensors soll einen relativ großen Abstand zwischen der Vorrichtung und dem Bewegungsgeber ermöglichen.

Es hat sich nun gezeigt, daß dieser erzielbare Abstand zwischen Bewegungsgeber und der die Bewegung erfassenden Vorrichtung - bestehend aus Magnet und Sensor - in erheblicher Weise dadurch begrenzt ist, daß die vom magnetischen Sensor erfaßte Feldstärke mit dem Quadrat der Entfernung zum Bewegungsgeber - also zu den Zähnen eines Zahnrades-abnimmt. Insbesondere, wenn dieser Abstand größer wird als der Abstand zweier Zähne voneinander, so werden die Schwankungen des Magnetfeldes am Ort des Sensors so gering, daß keine ausreichenden Wechselamplituden zur Erfassung der Bewegung des Bewegungsgebers mehr vorhanden sind. Aus diesem Grund sind derartige Sensoren bisher immer so aufgebaut worden, daß die Vorrichtung zur Erfassung der Drehbewegung beispielsweise in eine Bohrung eines den Bewegungsgeber umgebenden Gehäuses eingeschraubt wurde, da sich die maximalen Abstände auf wenige Millimeter beschränken.

Aufgabe der vorliegenden Erfindung ist es nun, diese Anordnung so zu ertüchtigen, daß der magnetische Sensor wesentlich größere Abstände zum Bewegungsgeber besitzen kann, ohne daß die Zuverlässigkeit der Impulsgabe beeinträchtigt wird.

Diese Aufgabe wird erfindungsgemäß dadurch gelöst, daß sich zwischen dem Magneten und dem magnetischen Sensor eine Trennwand aus nicht ferromagnetischem Material befindet und daß der Abstand zwischen den ferromagnetischen Teilen und dem Magneten kleiner ist als der Abstand zwischen dem Magneten und dem magnetischen Sensor.

Bei einem erfindungsgemäßen magnetfeldinduzierten Impulsgeber ist eine Vergrößerung des Abstandes zwischen Sensor und Bewegungsgeber möglich, so daß auch ferromagnetische Teile eines Bewegungsgebers in einem Gehäuse oder hinter einer Trennwand von dem Sensor erfaßt werden können, ohne daß der Sensor in die Trennwand hineinragt oder dessen Zuführungsleitungen durch die Trennwand geführt werden müssen.

Vorteilhafte Weiterbildungen sind in den abhängigen Ansprüchen beschrieben. Zwei Ausführungsbespiele mit unterschiedlichen Magnetanordnungen sind in den Fig. 1 und 2 schematisch dargestellt. Fig. 3 zeigt ein Diagramm, aus dem der maximale Abstand zwischen Sensor und Magnet abhängig von der Gesamtanordnung hervorgeht.

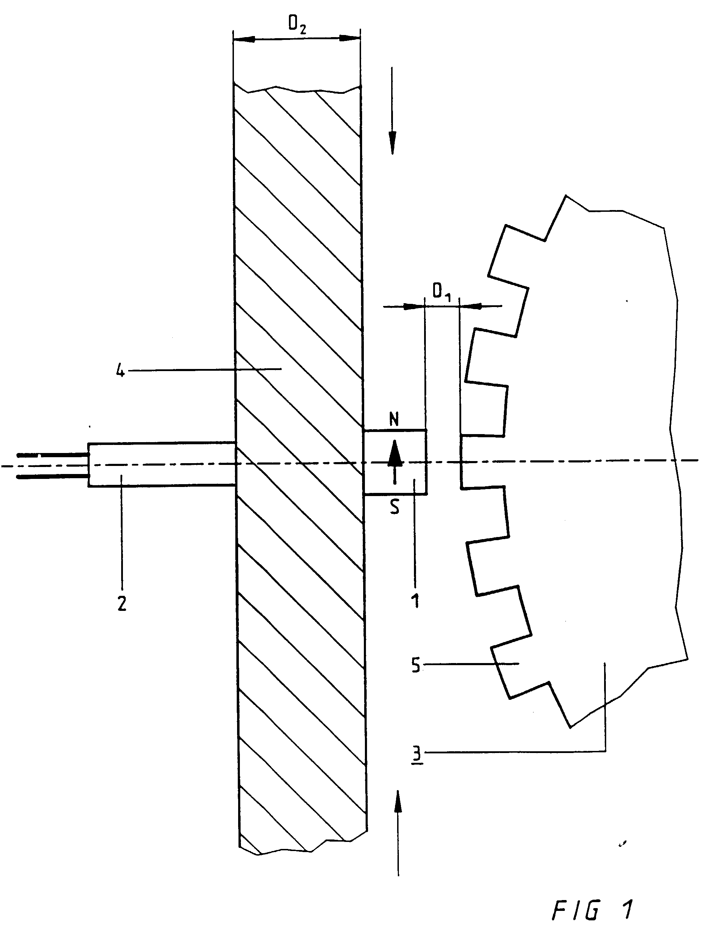

In Fig. 1 ist ein Magnet 1 und ein magnetfeldabhängiger Sensor 2, der bei Erreichen eines bestimmten Magnetfeldes schaltet, zu beiden Seiten einer Trennwand 4 angeordnet. Die Beeinflussung des Magnetfeldes des Magneten 1 erfolgt durch die Zähne eines Zahnrades 3, die damit als ferromagnetische Teile zur Beeinflussung des Magnetfeldes des Magneten 1 wirken. Die Anordnung ist so getroffen, daß der Magnet in Umfangsrichtung des Zahnrades 3 magnetisiert ist und daß der Abstand D1 zwischen Magnet und den ferromagnetischen Teilen 5 kleiner ist als der Abstand D2 zwischen dem Magnet 1 und dem Sensor 2.

Damit ist es möglich, eine normale Trennwand oder die Gehäusewand eines Getriebes zwischen Magnet 1 und Sensor 2 vorzusehen, da im Gegensatz zum Bekannten, bei dem Magnet und Sensor eine Einheit bilden, bei zunehmender Entfernung des Sensors 2 von den zu erfassenden ferromagnetischen Teilen 5 der Einfluß dieser Teile 5 auf das Magnetfeld des Magneten 1 nicht mehr vermindert wird.

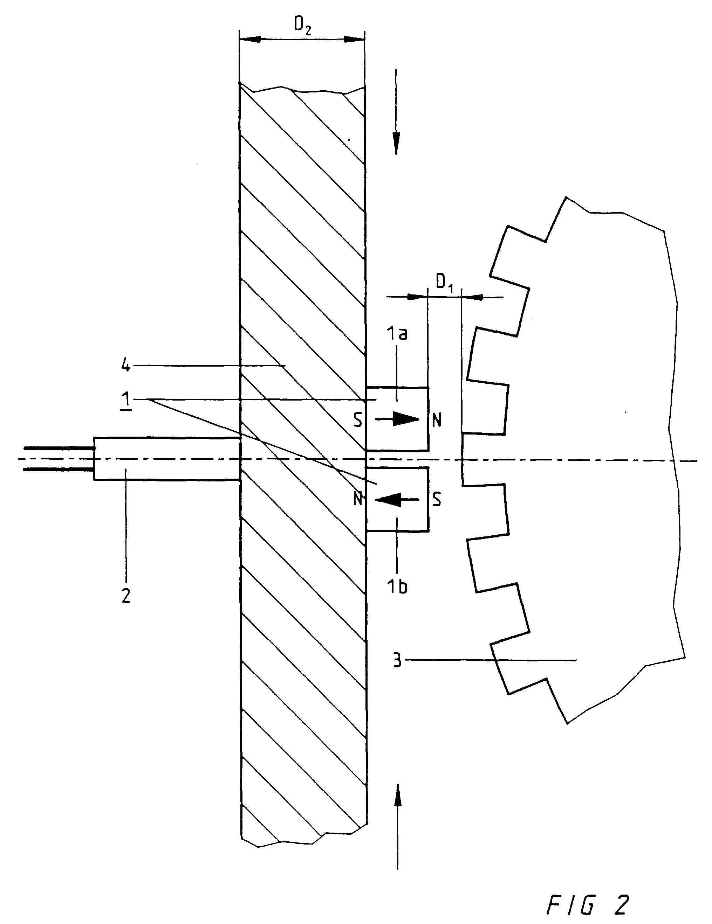

In Fig. 2 ist in etwa die gleiche Anordnung dargestellt mit dem Unterschied, daß der Magnet 1 aus zwei Teilmagneten 1a und 1b besteht, die in Richtung des Zahnrades 3 bzw. des Sensors 2 magnetisiert sind. Bedingt durch die andere Form des hierdurch erzeugten Magnetfeldes nimmt die magnetische Feldstärke in Richtung zum magnetfeldabhängigen Sensor 2 stärker ab als bei der Anordnung nach Fig. 1; allerdings hat sich gezeigt, daß diese Anordnung dafür unempfindlicher ist gegenüber Montagetoleranzen von Sensor 2 und Magnet 1.

Zum Nachweis der Größe des Effektes, den man im Hinblick auf den Abstand zwischen den ferromagnetischen Teilen 5 und dem Sensor 2 erzielen kann, wurden Versuche mit einem Zahnrad gemacht, bei dem die Breite der Zähne 3,2 mm, der Abstand zweier Zähne voneinander 4 mm und die Höhe der Zähne 2,5 mm betrug. Für verschiedene Abstände des Magneten 1 von den ferromagnetischen Teilen 5 (Abstände D1 in mm) wurde die maximale Entfernung des Sensors 2 vom Magneten (Abstand D2 in mm) ermittelt. Das ist die Entfernung, in der noch ein sicheres Schalten mit einem vorgegebenen Sensor möglich war.

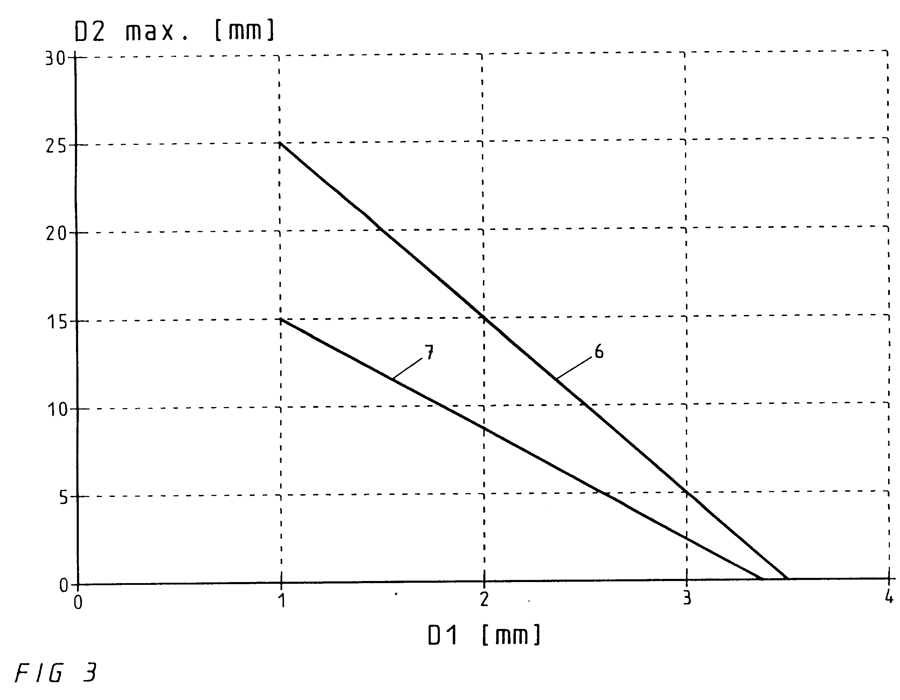

Die Ergebnisse sind in Fig. 3 für zwei verschiedene Größen des Magneten 1, der entsprechend Fig. 1 angeordnet war, dargestellt. Die Kurve 6 wurde mit einem Neodym-Eisen-Bor-Magneten mit den Abmessungen 10 x 5 x 4 mm gemessen, während für die Kurve 7 ein Samarium-Kobalt-Magnet mit den Abmessungen 6 x 3 x 4 mm eingesetzt wurde. Die bekannte Anordnung, bei der der Sensor unmittelbar am Magneten 1 angeordnet ist, zeigt hier der Punkt, bei dem der Abstand D2 max. gleich Null ist. Man sieht, daß für beide Magnete ein maximaler Abstand D1 zwischen 3 und 4 mm erzielt werden kann. Diese Abstände reichen im allgemeinen nicht aus, um tatsächlich den magnetischen Sensor 2 außerhalb eines Gehäuses für ein Getriebe anzuordnen, so daß trotz des Bekanntseins dieses Sensorprinzips immer dafür Sorge getragen werden mußte, daß in einer Trennwand zwischen den sich bewegenden ferromagnetischen Teilen und dem Außenraum eine Öffnung für den Sensor bzw. dessen Zuleitungen vorgesehen werden mußte.

Verringert man den Abstand zwischen Magnet 1 und ferromagnetischem Teil 5 auf 1 mm, welches konstruktionsbedingt eine realistische Größe darstellt, so sieht man, daß im Falle der Kurve 7 max. 15 mm Abstand zwischen dem Magnet 1 und dem Sensor 2 vorgesehen werden können. Mit dem stärkeren Magneten nach Kurve 6 ist hier sogar ein Abstand von 25 mm zu erreichen. Damit ist es erstmals möglich, mit einem derartigen Sensor die Bewegung eines Zahnrades oder anderer ferromagnetischer Teile in einem Gehäuse zu erfassen, ohne daß der Sensor 2 in die Gehäusewand bzw. Trennwand hineinragt oder im Innern dieser Wand angeordnet werden muß.

Weitere Versuche zur Ermittlung der Montagetoleranz für den Sensor 2 haben ergeben, daß mit zwei Magneten, die entsprechend Fig. 2 angeordnet waren und aus Samarium-Kobalt-Material mit den Abmessungen 5 x 3 x 2 mm bestanden, bei einem Abstand D1 von 1,5 mm der Sensor parallel zur Achse des Zahnrades 3 um ± 5 mm und parallel zum Umfang des Zahnrades 3 um ± 7 mm verschoben werden konnte, ohne daß die Ansprechsicherheit nachgelassen hat.

Selbstverständlich darf die Trennwand oder Gehäusewand nicht aus ferromagnetischem Material bestehen, da dies eine Abschirmwirkung für den Magneten 1 bedeuten würde.

Die genannten Abstände zwischen Magnet 1 und Sensor 2 sind selbstverständlich auch dann einzuhalten, wenn zwischen Magnet 1 und Sensor 2 keine feste Trennwand vorhanden ist; allerdings ist eine solche Anordnung nur in Ausnahmefällen sinnvoll, da dann kein Bedarf für einen Abstand zwischen Magnet 1 und Sensor 2 vorliegt. Ein derartiger Ausnahmefall könnte dann gegeben sein, wenn z. B. wegen unterschiedlichen elektrischen Potentialen von den ferromagnetischen Teilen und dem Magneten einerseits und dem magnetfeldabhängigen Sensor 2 andererseits eine Trennstrecke vorgesehen werden muß.

## Patentansprüche

1. Magnetfeldinduzierter Impulsgeber zur Erfassung von ferromagnetischen Teilen (5) eines Bewegungsgebers (3) unter Verwendung eines zwischen den ferromagnetischen Teilen (5) des Bewegungsgebers (3) und einem magnetischen Sensor (2) zur Erfassung eines Magnetfeldes angeordnetem Magneten (1), dessen Magnetfeld durch die ferromagnetischen Teile (5) so beeinflußt wird, daß im magnetischen Sensor (2) von der Bewegung der ferromagnetischen Teile (5) abhängige Impulse erzeugt werden,
**dadurch gekennzeichnet**, daß sich zwischen dem Magneten (1) und dem magnetischen Sensor (2) eine Trennwand (4) aus nicht ferromagnetischem Material befindet und daß die kleinsten Abstände (D1) zwischen den ferromagnetischen Teilen (5) sowie zu dem Magneten (1) kleiner sind als der Abstand (D2) zwischen dem Magneten (1) und dem magnetischen Sensor (2).

2. Impulsgeber nach Anspruch 1,
**dadurch gekennzeichnet**, daß es sich bei den ferromagnetischen Teilen (5) um die Zähne eines in einem rotierenden Zahnrades (3) handelt, daß die Trennwand (4) Teil des Gehäuses ist und daß der Magnet (1) an der Innenwand und der magnetische Sensor (2) an der Außenwand des mindestens an dieser Stelle nicht ferromagnetischen Gehäuses befestigt ist.

3. Impulsgeber nach Anspruch 1, **dadurch gekennzeichnet**, daß der Magnet (1) in eine Aussparung der Trennwand (4) eingelassen ist.

## Claims

1. Magnetically induced pulse generator for measuring ferromagnetic parts (5) of a motion detector (3) by using a magnet (1), which is arranged between the ferromagnetic parts (5) of the motion detector (3) and a magnetic sensor (2) for measuring a magnetic field, and whose magnetic field is influenced by the ferromagnetic parts (5) such that pulses dependent on the movement of the ferromagnetic parts (5) are generated in the magnetic sensor (2), characterized in that a partition (4) made from non-ferromagnetic material is located between the magnet (1) and the magnetic sensor (2), and in that the smallest spacings (D1) between the ferromagnetic parts (5) as well as in relation to the magnet (1) are smaller than the spacing (D2) between the magnet (1) and the magnetic sensor (2).

2. Pulse generator according to Claim 1, characterized in that the ferromagnetic parts (5) are the teeth of a rotating toothed wheel (3), in that the partition (4) is part of the housing, and in that the magnet (1) is fastened to the inner wall, and the magnetic sensor (2) is fastened to the outer wall of the housing, which is non-ferromagnetic at least at this position.

3. Pulse generator according to Claim 1, characterized in that the magnet (1) is let into a cutout in the partition (4).

## Revendications

1. Générateur inductif d'impulsions pour détecter des éléments ferromagnétiques (5) d'un générateur de mouvement (3) en utilisant un aimant (1) situé entre les éléments ferromagnétiques (5) du générateur de mouvement (3) et un capteur magnétique (2) servant à mesurer un champ magnétique, aimant (1) dont le champ magnétique est influencé par les éléments ferromagnétiques (5) de manière à ce que des impulsions dépendantes du mouvement des éléments ferromagnétiques (5) soient produites dans le capteur magnétique (2), caractérisé en ce qu'une cloison (4) faite d'un matériau non ferromagnétique est située entre l'aimant (1) et le capteur magnétique (2) et en ce que les distances minimales (D1) entre les éléments ferromagnétiques (5) et l'aimant (1) sont inférieures à la distance (D2) entre l'aimant (1) et le capteur magnétique (2).

2. Générateur d'impulsions selon la revendication 1, caractérisé en ce que les éléments ferromagnétiques (5) sont les dents d'une roue dentée (3) en rotation, en ce que la cloison (4) est une partie du carter et en ce que l'aimant (1) est fixé sur la paroi intérieure et le capteur magnétique (2) sur la paroi extérieure du carter qui, au moins à cet endroit, n'est pas ferromagnétique.

3. Générateur d'impulsions selon la revendication 1, caractérisé en ce que l'aimant (1) est inséré dans un évidement de la cloison (4).
